# EUROPEAN PATENT SPECIFICATION

(11) **EP 3 398 389 B1**
(45) Date of publication and mention of the grant of the patent: **27.10.2021**
(21) Application number: 16888791.7
(22) Date of filing: 04.02.2016
(51) Int. Cl.: H04W 72/04

(54) **TRANSMITTING ACKNOWLEDGEMENTS**
SENDEN VON BESTÄTIGUNGEN
TRANSMISSION D'ACCUSÉS DE RÉCEPTION

(43) Date of publication of application: 07.11.2018
(73) Proprietor: Lenovo Innovations Limited (Hong Kong), Quarry Bay, Hong Kong (HK)
(72) Inventor: LING, Wei, Beijing 102299 (CN); SHEN, Zukang, Beijing 100012 (CN)
(74) Representative: Openshaw & Co.
(86) International application number: PCT/CN2016/073570
(87) International publication number: WO 2017/132966

(56) References cited:
- EP-A1- 2 056 616
- EP-A1- 3 306 979
- WO-A1-2013/166689
- WO-A1-2016/144243
- CN-A- 104 579 546
- US-A1- 2010 195 587
- 'ETSI. ''ETSI TS 136 213 V8.3.0'' LTE; Evolved Universal Terrestrial Radio Access (E-UTRA) ; Physical layer procedures' 3GPP TS 36.213 30 November 2008, XP055282166

## Description

### FIELD

The subject matter disclosed herein relates to transmitting acknowledgements.

### BACKGROUND

### DESCRIPTION OF THE RELATED ART

Communication devices such as mobile telephone user equipment transmit acknowledgements to confirm receiving data.

EP2056616 A1 describes a mobile communication system applying long TTI in DL data transmission and short TTI in UL ACK/NACK transmission.

### BRIEF SUMMARY

The invention is defined by the appended claims.

A method for transmitting acknowledgements is disclosed according to appended claim 1. A corresponding apparatus is disclosed according to appended claim 7.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a schematic block diagram illustrating one embodiment of a communication system;
Figure 1B is a schematic block diagram illustrating one embodiment of a frame;
Figure 1C is a schematic block diagram illustrating one embodiment of long-type subframes;
Figure 1D is a schematic block diagram illustrating one embodiment of short-type subframes;
Figure 2A is a schematic block diagram illustrating one embodiment of a configuration parameter;
Figure 2B is a schematic block diagram illustrating one embodiment of acknowledgements;
Figure 3A is a schematic block diagram illustrating one embodiment of transmitted subframes;
Figure 3B is a schematic block diagram illustrating one alternative embodiment of transmitted subframes;
Figure 4A is a schematic block diagram illustrating one embodiment of transmitted subframes;
Figure 4B is a schematic block diagram illustrating one alternative embodiment of transmitted subframes;
Figure 4C is a schematic block diagram illustrating one alternative embodiment of transmitted subframes;
Figure 5 is a schematic block diagram illustrating one embodiment of a transceiver; and
Figure 6 is a schematic flow chart diagram illustrating one embodiment of a HARQ ACK transmission method.

### DETAILED DESCRIPTION

As will be appreciated by one skilled in the art, aspects of the embodiments may be embodied as a system, method or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which comprises one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

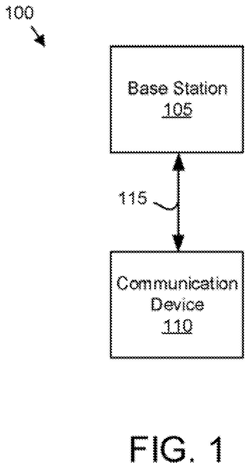

Figure 1A is a schematic block diagram illustrating one embodiment of a communication system 100. The system 100 includes a base station 105 and a communication device 110. The base station 105 communicates with the communication device 110 through transmissions 115. The base station 105 may be an evolved node B (eNB) Long Term Evolution (LTE) base station. The communication device 110 may be a mobile telephone, a machine-type communications (MTC) device, a tablet computer, a laptop computer, and embedded communication devices in automobiles, kiosks, appliances, and the like.

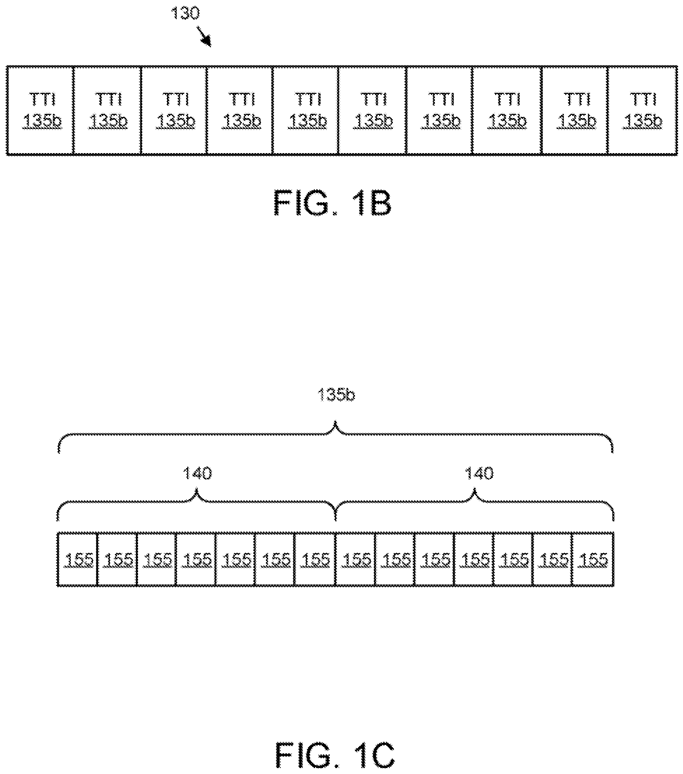

Figure 1B is a schematic block diagram illustrating one embodiment of a frame 130. The frame 130 is transmitted in a transmission 115. The frame 130 may have a duration of 10 milliseconds (ms). In addition, the frame 130 comprises one or more long-type subframes 135b. In the depicted embodiment, the frame 130 includes 10 long-type subframes 135b. A long-type subframe 135b may have a duration of one ms.

Figure 1C is a schematic block diagram illustrating one embodiment of a long-type subframe 135b. Each long-type subframe 135b may include two slots 140. Each slot 140 may have a duration of 0.5 ms. For normal cycle prefixes, each slot 140 may comprise seven Orthogonal Frequency Division Multiple access (OFDM) symbols 155 for downlink transmissions and Single-Carrier Frequency Division Multiple Access (SC-FDMA) symbols 155 for uplink transmissions. The 14 symbols 155 may comprise the long-type subframe 135b. Alternatively, for extended cycle prefixes, each slot 140 may comprise six symbols 155.

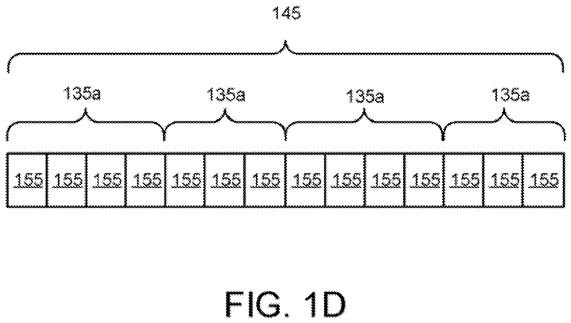

Figure 1D is a schematic block diagram illustrating one embodiment of an interval 145. In one embodiment, the interval 145 has a duration that is equal to a long-type subframe 135b. The interval 145 includes four short-type subframes 135a. Each short-type subframe 135a may include three or four symbols 155.

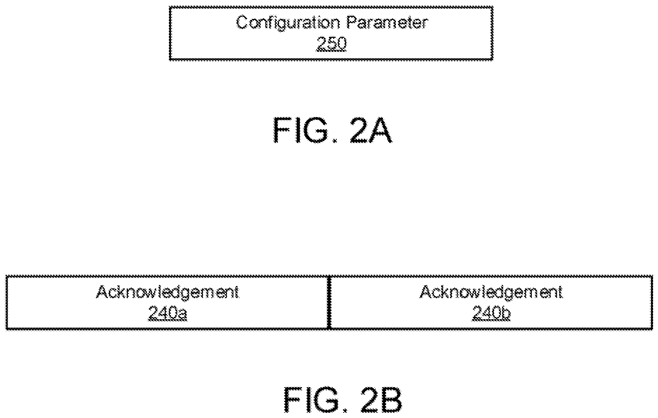

Figure 2A is a schematic block diagram illustrating one embodiment of configuration parameters 250. The configuration parameters 250 may be organized as a data structure in a memory. The configuration parameters 250 may specify how to transmit an acknowledgement in response to combinations of data blocks and downlink control channels that are transmitted via the short-type subframes 135a.

Figure 2B is a schematic block diagram illustrating one embodiment of acknowledgements 240a-b. The acknowledgments 240a-b maybe organized a data structure that is transmitted between the communication device 110 and the base station 105. The acknowledgments 240a-b may comprise at least one positive acknowledgments or at least one negative acknowledgments. The acknowledgments 240a-b may include Hybrid Automatic Repeat Request (HARQ) Acknowledgements (ACK) bits or HARQ Negative Acknowledgements (NACK) bits.

A HARQ ACK bit may be generated if a data block is received. Similarly, a HARQ NACK bit may be generated if a data block is not received. A plurality of HARQ ACK bits and HARQ NACK bits may be encoded as an acknowledgement 240a-b. In one embodiment, HARQ ACK bits and HARQ NACK bits for the data blocks of one or subframes 135a-b may be encoded in one or more acknowledgements 240a-b.

In one embodiment, the acknowledgment 240 may employ HARQ bundling. HARQ bundling may calculate a logical AND of a plurality of HARQ ACK bits for a plurality of data blocks to generate the HARQ ACK.

Alternatively, the acknowledgment 240 may employ HARQ multiplexing. One or more HARQ ACK bits or HARQ NACK bits may be transmitted via an uplink control channel using a specified uplink control channel format.

The acknowledgment 240 may include one bit for each data block in a short-type subframe 135a. For example, if the short-type subframe 135a includes two data blocks, the acknowledgment 240 may include two bits for the two data blocks. Similarly, if the short-type subframe 135a includes one data block, the acknowledgment 240 may include one bit for the data block. As a result, each HARQ process may be represented by one bit.

When data blocks 220 are transmitted between the communication device 110 and the base station 105, the receiving device such as the communication device 110 or the base station 105 generates a positive acknowledgement 240 such as a HARQ ACK bit to acknowledge that the data block 220 is correctly received. In addition, the receiving device may generate a negative acknowledgement 240 such as a HARQ NACK bit to indicate that the data block 220 is erroneously received. An acknowledgement 240a-b may be generated as a function of the HARQ feedback such as the HARQ ACK bits and HARQ NACK bits. In one embodiment, the acknowledgement 240a-b comprises a logical AND of the HARQ ACK bits and HARQ NACK bits. Alternatively, each acknowledgement 240a-b may be encoded in an uplink control channel. In one embodiment, each acknowledgement 240a-b may comprise one or more acknowledgement bits.

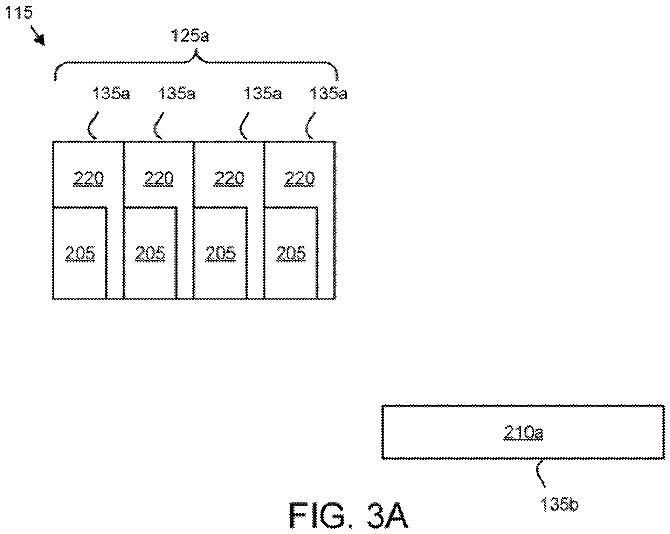

Figure 3A is a schematic block diagram illustrating one embodiment of transmitted subframes 135. The examples herein illustrate transmissions between the base station 105 to the communication device 110 using downlink control channels 205 and uplink control channels 210. In the depicted embodiment, at least one first data block 220 is received in at least one of a plurality 125a of short-type subframes 135a that is equivalent in the duration of a long-type subframe 135b. For example, if the duration of the long-type subframe 135b is 1 ms, the duration of the first plurality 125a of short-type subframes 135a may be 1 ms. The at least one first data block 220 is transmitted in at least one of a first plurality 125a of four consecutive short-type subframes 135a. An initial short-type subframe 135a of the first plurality 125a of short-type subframe 135a may be long-type subframe number n where n is an index of long-type subframes 135b. The first plurality 125a of short-type subframes 135a may include M short-type subframes 135a. M may be 4.

At least one uplink control resource for the HARQ feedback is determined for each downlink control channel 205 that is received by the receiving device. In the past, the acknowledgments 240 may have been transmitted over one long-type subframe 135b and/or a plurality of short-type subframes 135a. Unfortunately, the bits carrying symbols 155 that are available for transmitting acknowledgements 240 in short-type subframes 135a may be reduced, reducing the reliability of the acknowledgement 240. The embodiments described herein transmit the acknowledgments 240 consolidated into a long-type subframe 135b. Because more symbols 155 may be available in the long-type subframe 135b, the acknowledgements 240 may be transmitted more reliably. Furthermore, since acknowledgement 240 transmission on uplink control channels 210 using short-type subframes 135a cannot be multiplexed with legacy acknowledgement 240 transmission on uplink control channels 210 using legacy long-type subframes 135b, the uplink control overhead may be increased which in turn reduces the amount of available resource for the uplink data transmission and reduces the throughput of the uplink.

In the depicted embodiment, at least one first data block 220 in at least one of a first plurality 125a of short-type subframes 135a is received. A first acknowledgement 240a corresponding to the at least one first data block 220 received in the first plurality 125a of short-type subframes 135a is transmitted using a first long-type subframe 135b.

A first acknowledgment 240a of the HARQ ACKS corresponding to the at least one first data block 220 that are received within the first plurality 125a is transmitted using a first long-type subframe 135b. The first long-type subframe 135b may be subframe number n+k where k is 3 or 4. The first acknowledgment 240a may be transmitted as uplink control channel resources via a first uplink control channel 210a of the first long-type subframe 135b. The first uplink control channel 210a may be a Physical Uplink Control Channel (PUCCH) and may employ an uplink control channel format selected from the group consisting of PUCCH format 1a, PUCCH format 1b, PUCCH format 3, PUCCH format 4, and PUCCH format 5.

The first acknowledgment 240a may be transmitted via a first uplink control channel 210a on the long-type subframe 135b. In one embodiment, the first acknowledgment 240a may only be transmitted via the first uplink control channel 210a on the long-type subframe 135b. A given uplink control channel 210 and/or long-type subframe 135b may communicate a maximum number of acknowledgement bits. The maximum number of acknowledgement bits may be determined by an uplink control channel format.

In one embodiment, the first plurality 125a of short-type subframes 135a is aligned with boundaries of long-type subframes 135b. Alternatively, the first plurality 125a of short-type subframes 135a may not be aligned with boundaries of the long-type subframes 135b. A boundary may be a start or end of a long-type frame 135b and/or a slot 140. A first plurality 125a of short-type subframes 135a may align with the boundary of a long-type subframe 135b if a first short-type subframe 135b of the first plurality 125a a short-type subframes 135a starts concurrently with the start of the long-type subframe 135b. However, if the first short-type subframe 135a of the first plurality 125a of short-type subframe 135a does not start concurrently with the start of the long-type subframe 135b, then the first plurality 125a of short-type subframes 135a are not aligned with the boundaries of the long-type subframe 135b.

In one embodiment, an uplink control channel 210 such as the first uplink control channel 210a may span an entire long-type subframe 135b. The uplink control channel 210 may span the entire long-type subframe 135b if the control channel 210 and the long-type subframe 135b each start and end concurrently. Each uplink control channel 210 may be a PUCCH.

A downlink control channel 205 containing downlink control information is received in at least one of the first plurality 125a of short-type subframes 135a. The downlink control information schedules the at least one first data block 220 in the at least one first plurality 125a of short-type subframes 135a. In one embodiment, a plurality of downlink control channels 205 are received with downlink control information that schedules a plurality of data blocks 220. Each downlink control channel 205 may be a Physical Downlink Control Channel (PDCCH) and each data block 220 may be transmitted via a Physical Downlink Shared Channel (PDSCH).

In one embodiment, each uplink control channel 210 is identified by and associated with an uplink control channel resource. For example, the first uplink control channel 210a may comprise one uplink control channel resource. In one embodiment, the at least one uplink control channel resource is derived from the downlink control channel 205. An uplink control channel resource is derived from the downlink control channel 205 as a function of one or more identifiers from the downlink control channel 205 to the uplink control channel resource. In one embodiment, the uplink control channel resource is derived from the ACK/NACK Resource Indicator (ARI) of the downlink control channel 205. Alternatively, for data blocks 220 scheduled by a downlink control channel 205, and uplink control channel 210 may be derived based on the lowest Control Channel Element (CCE) index of the downlink control channel 205. In one embodiment, the uplink control channel 210 may employ PUCCH format 1a/1b resource that is implicitly derived to transmit the acknowledgment 240 corresponding to the downlink control channel 205, based on the lowest s-CCE index of the downlink control channel 205.

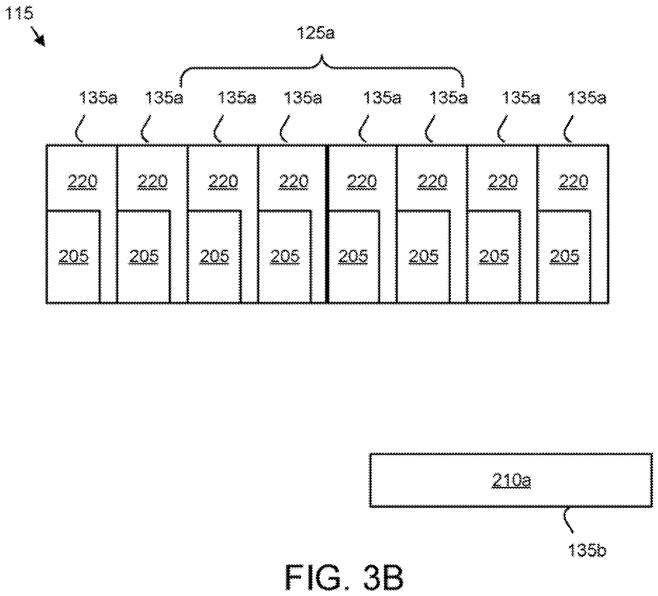

Figure 3B is a schematic block diagram illustrating one alternative embodiment of transmitted subframes 135. In the depicted embodiment, data blocks 220 are received in two intervals 145 that are each equivalent in the duration of a long-type subframe 135b. Each interval 145 may include four short-type subframes 135a. The first plurality 125a of short-type subframes 135a are not aligned on a boundary of a long-type subframe 135b. The short-type subframes 135a may be subframes number 135 n and n+1 respectively. The first plurality 125a of short-type subframes 135b may include M short-type subframes 135b where M is in the range of 1-14

The first acknowledgment 240a corresponding to the at least one first data block 220 is transmitted via uplink control channel resources using a first uplink control channel 210a of a first long-type subframe 135b. The uplink control channel 210 may be transmitted in subframe numbers n+k, where k is 3 or 4. The uplink control channel 210 may employ an uplink control channel format selected from the group consisting of PUCCH format 1a, PUCCH format 1b, PUCCH format 3, PUCCH format 4, and PUCCH format 5.

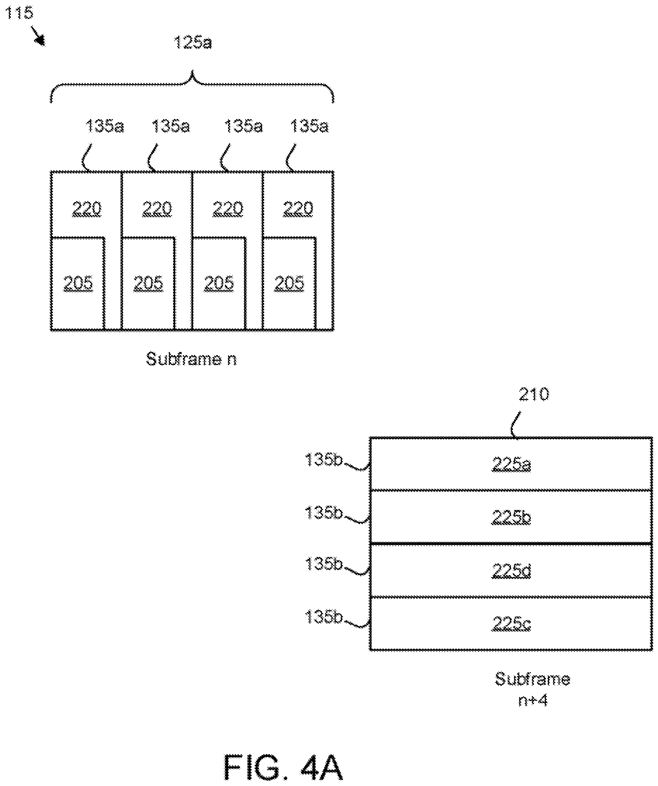

Figure 4A is a schematic block diagram illustrating one alternative embodiment of transmitted subframes. Figure 4A shows an example with a first plurality 125a of M=4 short-type subframes 135a in long-type subframe n 135b. An uplink control channel 210 may be long-type subframe 210 *n+k* where k=4. Assume a communication device 110 is configured with HARQ-ACK bundling and with single short-type subframe 135a scheduling. The communication device 110 may receive 4 data blocks 220 which are scheduled by 4 downlink control channels 205 in subframe n. Each downlink control channel 205 may be used to determine a PUCCH format 1a/1b uplink control channel resource 225 in subframe n+4 wherein the four PUCCH format 1/a/lb uplink control channel resources 225a-d are denoted as PUCCH format 1a/1b uplink control channel resource 1 225a, PUCCH format 1a/1b uplink control channel resource 2 225b, PUCCH format 1a/1b uplink control channel resource 3 225c and PUCCH format 1a/1b uplink control channel resource 4 225d respectively as shown in Figure 4A. Assuming the communication device 110 receives all downlink control channels 205 and data blocks 220 in the first plurality 125a of 4 short-type subframes 135a in long-type subframe n 135b, the communication device 110 may perform HARQ-ACK bundling by a logical "AND" operation of the HARQ-ACK bits per data blocks 220 codeword or Transport Block (TB) corresponding to the 4 received data blocks 220 in long-type subframe n 135b, and then transmit the bundling HARQ-ACK bit(s) using the PUCCH format 1a/1b uplink control channel resource 225 corresponding to the last short-type subframe 135a where a downlink control channel 205 is received such as. the PUCCH format 1a/1b uplink control channel resource 4 225d in Figure 4A.

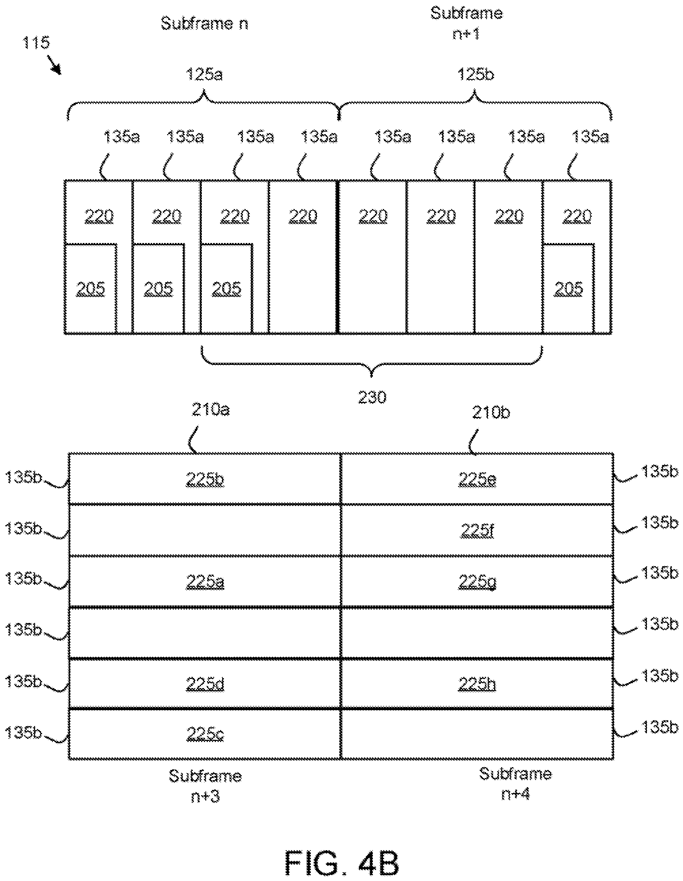

Figure 4B is a schematic block diagram illustrating one alternative embodiment of transmitted subframes 135. Assume the communication device 110 is configured with HARQ-ACK multiplexing by channel selection with PUCCH format 1b and is configured with multiple short-type subframe 135a scheduling. Figure 4B shows an example with pluralities 125a-b of M=4 short-type subframes 135a where an uplink control channel 210 is transmitted in long-type subframe *n+k* where k=4. There are N=5 data blocks 220 in a group 230 of 5 short-type subframes 135a scheduled by a single downlink control channel 205 for the communication device 110 across subframe n and subframe *n+1* as shown in Figure 4B.

Furthermore, assume the maximum number of the HARQ-ACK feedback bits to be fed back by channel selection with PUCCH format 1b is 4 (i.e. the same as supported by LTE), the downlink control channel 205 in the third short-type subframe 135a in subframe n is used to derive two PUCCH format 1b uplink control channel resources 225 (i.e. PUCCH format 1b uplink control channel resources 3 and 4 225c-d in Figure 4B) in subframe *n+3,* and three PUCCH format 1b uplink control channel resources 225 (i.e. PUCCH format 1b uplink control channel resources 5, 6, and 7 225e-g in Figure 4B) in subframe n+4. In addition, the downlink control channel 205 in the first short-type subframe 135a in subframe *n* is used to derive the PUCCH format 1b uplink control channel resource 1 225a in subframe n+3. The downlink control channel 205 in the second short-type subframe 135a in subframe *n* is used to derive the PUCCH format 1b uplink control channel resource 2 225b in subframe *n+3* and the downlink control channel 205 in the fourth short-type subframe 135a in subframe *n*+*1* is used to derive the PUCCH format 1b uplink control channel resource 8 225h in subframe *n*+*4*.

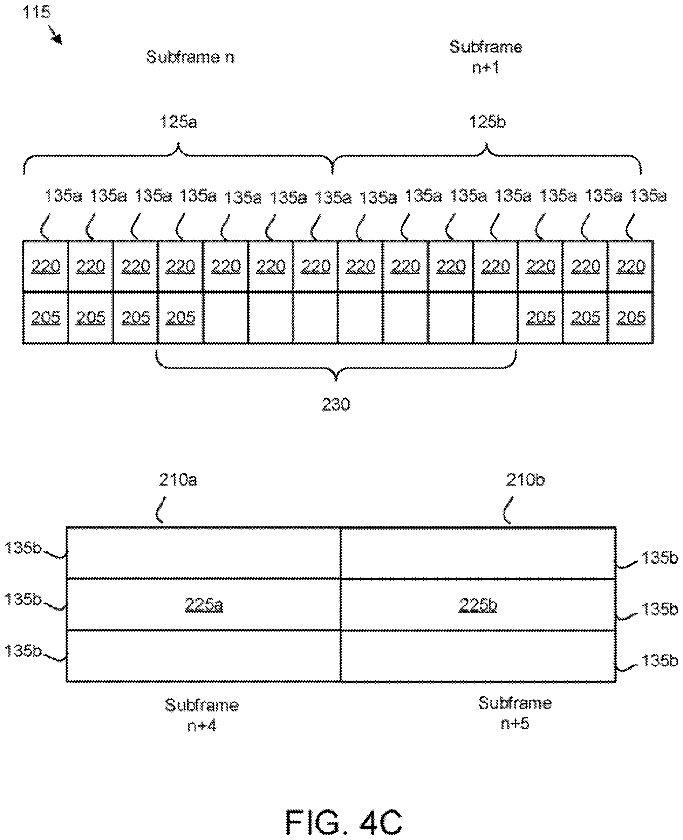

The communication device 110 may use the 4 PUCCH format 1b uplink control channel resources 1 - 4 225a-d in subframe *n+3* to feedback the 4 HARQ-ACK bits corresponding to the data blocks 220 received in the 4 short-type subframes 135a in subframe n. The communication device 110 may use the 4 PUCCH format 1b uplink control channel resources 5 - 8 225e-h in subframe n+4 to feedback the 4 HARQ-ACK bits corresponding to the data blocks 220 received in the 4 short-type subframes 135a in subframe *n+1.* It is noted that by channel selection, the communication device 110 may select one of the 4 PUCCH format 1b uplink control channel resources 225 and transmit a QPSK symbol on the selected PUCCCH format 1b uplink control channel resource 225 (i.e. the PUCCH format 1a/1b uplink control channel resource 1 225a in subframe n+3 and the PUCCH format 1a/1b uplink control channel resource 6 225f in subframe n+4 as shown in Figure 4B). Figure 4C is a schematic block diagram illustrating one alternative embodiment of transmitted subframes 135. Assume the communication device 110 is configured with PUCCH format 3 (or 4 or 5) for its HARQ-ACK transmission and is configured with multiple short-type subframe 135a scheduling. Figure 4C shows an example with pluralities 125a-b of M=7 short-type subframes 135a where k=4.

A group 230 of N=8 data blocks 220 in 8 short-type subframes 135a may be scheduled by a single downlink control channel 205 for the communication device 110 across subframe n and subframe *n+1* as shown in Figure 4C. For the downlink control channel 205 in the fourth short-type subframe 135a in subframe n, the downlink control channel 205 schedules data blocks 220 in 4 short-type subframes 135a in subframe n and also 4 data blocks 220 in 4 short-type subframes 135a in subframe *n*+*1.* Therefore, the ARI bits in the downlink grant transmitted on the downlink control channel 205 in the fourth short-type subframe 135a in subframe n may indicate one PUCCCH format 3 (or 4 or 5) uplink control channel resource 225 (i.e. the PUCCH format 3/4/5 uplink control channel resource 1 225a in Figure 4C) in subframe *n+4* and one PUCCH format 3 (or 4 or 5) resource (i.e. the PUCCH format 3/4/5 uplink control channel resource 2 225b in Figure 4C) in subframe *n+5.* In Figure 4C, the PUCCH format 3 (or 4 or 5) uplink control channel resource 1 and 2 225a-b in subframe *n+4* and *n+5* may be the same or may be different. The communication device 110 may use the PUCCH format 3 (or 4 or 5) uplink control channel resource 1 225a in subframe n+4 to transmit the HARQ-ACK bits corresponding to all data blocks 220 received in subframe n, and the communication device 110 may use the PUCCH format 3 (or 4 or 5) uplink control channel resource 2 225b in subframe n+5 to transmit the HARQ-ACK bits corresponding to all data blocks 220 received in subframe n+1.

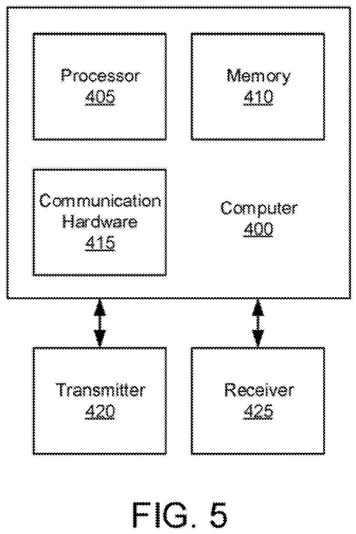

Figure 5 is a schematic block diagram illustrating one embodiment of a transceiver 430. The transceiver 430 may be embodied in the communication device 110. Alternatively, the transceiver 430 may be embodied in the base station 105. In the depicted embodiment, the transceiver 430 includes a computer 400, a transmitter 420, and receiver 425. The transmitter 420 may transmit radio signals. The receiver 425 may receive radio signals.

The computer 400 may include a processor 405, a memory 410, and communication hardware 415. The memory 410 may include a semiconductor storage device, hard disk drive, an optical storage device, a micromechanical storage device, or combinations thereof. The memory 410 may store code. The processor 405 may execute the code. The communication hardware may manage communications between the processor 405 and the transmitter 420 and the receiver 425.

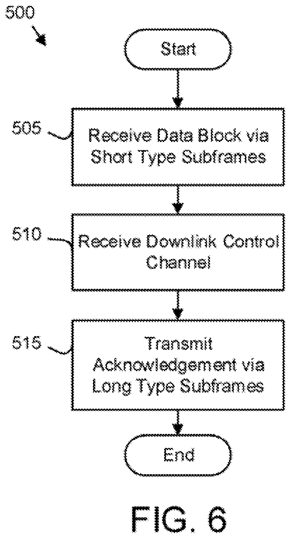

Figure 6 is a schematic flow chart diagram illustrating one embodiment of an acknowledgment 240 transmission method 500. The method 500 may transmit one or more acknowledgments 240 corresponding to data blocks 220 received in short-type subframes 135a using long-type subframes 135b. The method 500 may be performed by the transceiver 430.

The method 500 starts, and in one embodiment, the receiver 425 receives 505 at least one first data block 220 in at least one of a first plurality 125a of short-type subframes 135a. Alternatively, the receiver 425 may receive 505 at least one second data block 220 in at least one of a second plurality 125b of short-type subframes 135a.

The receiver 425 further receives 510 a downlink control channel 205 containing downlink control information in at least one of the first plurality 125a of short-type subframes 135a and/or the second plurality 125b of short-type subframes 135a. The downlink control information schedules the at least one first data blocks 220 or the at least one second data blocks 220 in the short-type subframes 135a.

The transmitter 420 may transmit 515 a first acknowledgment 240a corresponding to the at least one first data block 220 received in the first plurality 125a of short-type subframes 135a using a first long-type subframe 135b and the method 500 ends. Alternatively, the transmitter 420 may transmit 515 a second acknowledgment 240b corresponding to the at least one second data block 220 received in the second plurality 125b of short-type subframes 135a using a second long-type subframe 135b.

The embodiments may employ one or more long-type subframes 135b to consolidate and transmit the acknowledgments 240 for the data blocks 220. Because more symbols 155 may be available in the long-type subframe 135b, the acknowledgements 240 may be transmitted more reliably.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of the claims are to be embraced within their scope.

## Claims

1. A method comprising:
receiving (505) at least one first data block in at least one of a first plurality of short-type subframes (135a);
transmitting (515) a first acknowledgement corresponding to the at least one first data block received in the first plurality of short-type subframes (135a) using a first long-type subframe (135b), wherein a duration of the first plurality of short-type subframes (135a) is equal to a duration of the long-type subframe (135b);
receiving (510) a downlink control channel containing downlink control information in at least one of the first plurality of short-type subframes (135a), wherein the downlink control information schedules the at least one first data block in the at least one of the first plurality of short-type subframes (135a); and
wherein multiple uplink control resources in the first long-type subframe (135b) are derived from the downlink control channel in the at least one of the first plurality of short-type subframes.

2. The method of claim 1, wherein the first plurality of short-type subframes (135a) are aligned with boundaries of long-type subframes (135b), or wherein the first plurality of short-type subframes (135a) are not aligned with boundaries of long-type subframes (135b).

3. The method of claim 1, wherein the first acknowledgement is transmitted via a first uplink control channel of the first long-type subframe (135b), wherein the first uplink control channel is associated with an uplink control channel resource, and optionally wherein the first uplink control channel spans the entire long-type subframe (135b).

4. The method of claim 1, wherein the downlink control information schedules at least one second data block in at least one of a second plurality of short-type subframes (135a) and a total duration of the second plurality of short-type subframes (135a) equals a duration of the long-type subframe (135b).

5. The method of claim 4, the method further comprising:
receiving at least one second data block in at least one of a second plurality of short-type subframes (135a);
transmitting a second acknowledgement corresponding to the at least one second data block received in the second plurality of short-type subframes (135a) using a second long-type subframe (135b), and optionally
wherein the second acknowledgement is transmitting on a second uplink control channel using the second long-type subframe (135b), and optionally wherein at least one uplink control channel resource in the second long-type subframe (135b) is derived from the downlink control channel.

6. The method of claim 1, wherein the acknowledgement comprises at least a positive acknowledgement or a negative acknowledgement.

7. An apparatus comprising:
a receiver (425) configured to receive at least one first data block in at least one of a first plurality of short-type subframes (135a); and
a transmitter (420) configured to transmit a first acknowledgement corresponding to the at least one first data block received in the first plurality of short-type subframes (135a) using a first long-type subframe (135b), wherein a duration of the first plurality of short-type subframes (135a) is equal to a duration of the long-type subframe (135b);
wherein the receiver (425) is further configured to receive a downlink control channel containing downlink control information in at least one of the first plurality of short-type subframes (135a), wherein the downlink control information schedules the at least one first data block in the at least one of the first plurality of short-type subframes (135a); and
wherein multiple uplink control channel resources in the first long-type subframe (135b) are derived from the downlink control channel in the at least one of the first plurality of short-type subframes.

8. A method comprising:
transmitting at least one first data block in at least one of a first plurality of short-type subframes (135a); and
receiving a first acknowledgement corresponding to the at least one first data block transmitted in the first plurality of short-type subframes (135a) using a first long-type subframe (135b), wherein a duration of the first plurality of short-type subframes (135a) is equal to a duration of the long-type subframe (135b);
transmitting a downlink control channel containing downlink control information in at least one of the first plurality of short-type subframes (135a), wherein the downlink control information schedules the at least one first data block in the at least one of the first plurality of short-type subframes (135a); and
wherein multiple uplink control channel resources in the first long-type subframe (135b) are derived from the downlink control channel in the at least one of the first plurality of short-type subframes.

9. The method of claim 8, wherein the first plurality of short-type subframes (135a) are aligned with boundaries of long-type subframes (135b), or wherein the first plurality of short-type subframes (135a) are not aligned with boundaries of long-type subframes (135b).

10. The method of claim 8, wherein the first acknowledgement is received via a first uplink control channel of the first long-type subframe (135b), wherein the first uplink control channel is associated with an uplink control channel resource, and optionally wherein the first uplink control channel spans the entire long-type subframe (135b).

11. The method of claim 8, wherein the downlink control information schedules at least one second data block in at least one of a second plurality of short-type subframes (135a) and a total duration of the second plurality of short-type subframes (135a) equals a duration of the long-type subframe (135b).

12. The method of claim 8, the method further comprising:
transmitting at least one second data block in at least one of a second plurality of short-type subframes (135a);
receiving a second acknowledgement corresponding to the at least one second data block transmitted in the second plurality of short-type subframes (135a) using a second long-type subframe (135b)
and optionally
wherein the second acknowledgement is transmitting on a second uplink control channel using the second long-type subframe (135b), and optionally wherein at least one uplink control channel resource in the second long-type subframe (135b) is derived from the downlink control channel, and optionally wherein the acknowledgement comprises at least a positive acknowledgement or a negative acknowledgement.

13. An apparatus comprising:
a transmitter (420) configured to transmit at least one first data block in at least one of a first plurality of short-type subframes (135a); and
a receiver (425) configured to receive a first acknowledgement corresponding to the at least one first data block transmitted in the first plurality of short-type subframes (135a) using a first long-type subframe (135b), wherein a duration of the first plurality of short-type subframes (135a) is equal to a duration of the long-type subframe (135b);
wherein the transmitter is further configured to transmit a downlink control channel containing downlink control information in at least one of the first plurality of short-type subframes (135a), wherein the downlink control information schedules the at least one first data block in the at least one of the first plurality of short-type subframes (135a); and
wherein multiple uplink control channel resources in the first long-type subframe (135b) are derived from the downlink control channel in the at least one of the first plurality of short-type subframes.

## Patentansprüche

1. Verfahren, das Folgendes umfasst:
Empfangen (505) wenigstens eines ersten Datenblocks in wenigstens einem von ersten mehreren Unterrahmen des kurzen Typs (135a);
Senden (515) einer ersten Bestätigung, die dem wenigstens einen ersten Datenblock entspricht, der in den ersten mehreren Unterrahmen des kurzen Typs (135a) empfangen wird, unter Verwendung eines ersten Unterrahmens des langen Typs (135b), wobei eine Dauer der ersten mehreren Unterrahmen des kurzen Typs (135a) gleich einer Dauer des Unterrahmens des langen Typs (135b) ist;
Empfangen (510) eines Downlink-Steuerkanals, der Downlink-Steuerinformationen in wenigstens einem der ersten mehreren Unterrahmen des kurzen Typs (135a) enthält, wobei die Downlink-Steuerinformationen den wenigstens einen ersten Datenblock in dem wenigstens einen der ersten mehreren Unterrahmen des kurzen Typs (135a) planen; und
wobei mehrere Uplink-Steuerressourcen in dem ersten Unterrahmen des langen Typs (135b) von dem Downlink-Steuerkanal in dem wenigstens einen der ersten mehreren Unterrahmen des kurzen Typs abgeleitet werden.

2. Verfahren nach Anspruch 1, wobei die ersten mehreren Unterrahmen des kurzen Typs (135a) mit Grenzen von Unterrahmen des langen Typs (135b) ausgerichtet sind, oder wobei die ersten mehreren Unterrahmen des kurzen Typs (135a) nicht mit Grenzen von Unterrahmen des langen Typs (135b) ausgerichtet sind.

3. Verfahren nach Anspruch 1, wobei die erste Bestätigung über einen ersten Uplink-Steuerkanal des ersten Unterrahmens des langen Typs (135b) gesendet wird, wobei der erste Uplink-Steuerkanal mit einer Uplink-Steuerkanalressource verknüpft ist, und optional wobei der erste Uplink-Steuerkanal den gesamten Unterrahmen des langen Typs (135b) überspannt.

4. Verfahren nach Anspruch 1, wobei die Downlink-Steuerinformationen wenigstens einen zweiten Datenblock in wenigstens einem von zweiten mehreren Unterrahmen des kurzen Typs (135a) planen und eine Gesamtdauer der zweiten mehreren Unterrahmen des kurzen Typs (135a) einer Dauer des Unterrahmens des langen Typs (135b) gleicht.

5. Verfahren nach Anspruch 4, wobei das Verfahren ferner Folgendes umfasst:
Empfangen wenigstens eines zweiten Datenblocks in wenigstens einem von zweiten mehreren Unterrahmen des kurzen Typs (135a);
Senden einer zweiten Bestätigung, die dem wenigstens einen zweiten Datenblock entspricht, der in den zweiten mehreren Unterrahmen des kurzen Typs (135a) empfangen wird, unter Verwendung eines zweiten Unterrahmens des langen Typs (135b), und optional
wobei die zweite Bestätigung auf einem zweiten Uplink-Steuerkanal unter Verwendung des zweiten Unterrahmens des langen Typs (135b) gesendet wird, und optional wobei wenigstens eine Uplink-Steuerkanalressource in dem zweiten Unterrahmen des langen Typs (135b) von dem Downlink-Steuerkanal abgeleitet ist.

6. Verfahren nach Anspruch 1, wobei die Bestätigung wenigstens eine positive Bestätigung oder eine negative Bestätigung umfasst.

7. Einrichtung, die Folgendes umfasst:
einen Empfänger (425), der konfiguriert ist, um wenigstens einen ersten Datenblock in wenigstens einem von ersten mehreren Unterrahmen des kurzen Typs (135a) zu empfangen; und
einen Sender (420), der konfiguriert ist, um eine erste Bestätigung zu senden, die dem wenigstens einen ersten Datenblock entspricht, der in den ersten mehreren Unterrahmen des kurzen Typs (135a) empfangen wird, unter Verwendung eines ersten Unterrahmens des langen Typs (135b), wobei eine Dauer der ersten mehreren Unterrahmen des kurzen Typs (135a) gleich einer Dauer des Unterrahmens des langen Typs (135b) ist;
wobei der Empfänger (425) ferner konfiguriert ist, um einen Downlink-Steuerkanal zu empfangen, der Downlink-Steuerinformationen in wenigstens einem der ersten mehreren Unterrahmen des kurzen Typs (135a) enthält, wobei die Downlink-Steuerinformationen den wenigstens einen ersten Datenblock in dem wenigstens einen der ersten mehreren Unterrahmen des kurzen Typs (135a) planen; und
wobei mehrere Uplink-Steuerkanalressourcen in dem ersten Unterrahmen des langen Typs (135b) von dem Downlink-Steuerkanal in dem wenigstens einen der ersten mehreren Unterrahmen des kurzen Typs abgeleitet werden.

8. Verfahren, das Folgendes umfasst:
Senden wenigstens eines ersten Datenblocks in wenigstens einem von ersten mehreren Unterrahmen des kurzen Typs (135a); und
Empfangen einer ersten Bestätigung, die dem wenigstens einen ersten Datenblock entspricht, der in den ersten mehreren Unterrahmen des kurzen Typs (135a) gesendet wird, unter Verwendung eines ersten Unterrahmens des langen Typs (135b), wobei eine Dauer der ersten mehreren Unterrahmen des kurzen Typs (135a) gleich einer Dauer des Unterrahmens des langen Typs (135b) ist;
Senden eines Downlink-Steuerkanals, der Downlink-Steuerinformationen enthält, in wenigstens einem der ersten mehreren Unterrahmen des kurzen Typs (135a), wobei die Downlink-Steuerinformationen den wenigstens einen ersten Datenblock in dem wenigstens einen der ersten mehreren Unterrahmen des kurzen Typs (135a) planen; und
wobei mehrere Uplink-Steuerkanalressourcen in dem ersten Unterrahmen des langen Typs (135b) von dem Downlink-Steuerkanal in dem wenigstens einen der ersten mehreren Unterrahmen des kurzen Typs abgeleitet werden.

9. Verfahren nach Anspruch 8, wobei die ersten mehreren Unterrahmen des kurzen Typs (135a) mit Grenzen von Unterrahmen des langen Typs (135b) ausgerichtet sind, oder wobei die ersten mehreren Unterrahmen des kurzen Typs (135a) nicht mit Grenzen von Unterrahmen des langen Typs (135b) ausgerichtet sind.

10. Verfahren nach Anspruch 8, wobei die erste Bestätigung über einen ersten Uplink-Steuerkanal des ersten Unterrahmens des langen Typs (135b) empfangen wird, wobei der erste Uplink-Steuerkanal mit einer Uplink-Steuerkanalressource verknüpft ist, und optional wobei der erste Uplink-Steuerkanal den gesamten Unterrahmen des langen Typs (135b) überspannt.

11. Verfahren nach Anspruch 8, wobei die Downlink-Steuerinformationen wenigstens einen zweiten Datenblock in wenigstens einem von zweiten mehreren Unterrahmen des kurzen Typs (135a) planen und eine Gesamtdauer der zweiten mehreren Unterrahmen des kurzen Typs (135a) einer Dauer des Unterrahmens des langen Typs (135b) gleicht.

12. Verfahren nach Anspruch 8, wobei das Verfahren ferner Folgendes umfasst:
Senden wenigstens eines zweiten Datenblocks in wenigstens einem von zweiten mehreren Unterrahmen des kurzen Typs (135a);
Empfangen einer zweiten Bestätigung, die dem wenigstens einen zweiten Datenblock entspricht, der in den zweiten mehreren Unterrahmen des kurzen Typs (135a) gesendet wird, unter Verwendung eines zweiten Unterrahmens des langen Typs (135b) und optional
wobei die zweite Bestätigung auf einem zweiten Uplink-Steuerkanal unter Verwendung des zweiten Unterrahmens des langen Typs (135b) gesendet wird, und optional wobei wenigstens eine Uplink-Steuerkanalressource in dem zweiten Unterrahmen des langen Typs (135b) von dem Downlink-Steuerkanal abgeleitet ist, und optional wobei die Bestätigung wenigstens eine positive Bestätigung oder eine negative Bestätigung umfasst.

13. Einrichtung, die Folgendes umfasst:
einen Sender (420), der konfiguriert ist, um wenigstens einen ersten Datenblock in wenigstens einem von ersten mehreren Unterrahmen des kurzen Typs (135a) zu senden; und
einen Empfänger (425), der konfiguriert ist, um eine erste Bestätigung zu empfangen, die dem wenigstens einen ersten Datenblock entspricht, der in den ersten mehreren Unterrahmen des kurzen Typs (135a) unter Verwendung eines ersten Unterrahmens des langen Typs (135b) gesendet wird, wobei eine Dauer der ersten mehreren Unterrahmen des kurzen Typs (135a) gleich einer Dauer des Unterrahmens des langen Typs (135b) ist;
wobei der Sender ferner konfiguriert ist, um einen Downlink-Steuerkanal zu senden, der Downlink-Steuerinformationen in wenigstens einem der ersten mehreren Unterrahmen des kurzen Typs (135a) enthält, wobei die Downlink-Steuerinformationen den wenigstens einen ersten Datenblock in dem wenigstens einen der ersten mehreren Unterrahmen des kurzen Typs (135a) planen; und
wobei mehrere Uplink-Steuerkanalressourcen in dem ersten Unterrahmen des langen Typs (135b) von dem Downlink-Steuerkanal in dem wenigstens einen der ersten mehreren Unterrahmen des kurzen Typs abgeleitet werden.

## Revendications

1. Procédé comprenant :
la réception (505) d'au moins un premier bloc de données dans au moins l'une d'une première pluralité de sous-trames de type court (135a) ;
la transmission (515) d'un premier accusé de réception correspondant à l'au moins un premier bloc de données reçu dans la première pluralité de sous-trames de type court (135a) à l'aide d'une première sous-trame de type long (135b), une durée de la première pluralité de sous-trames de type court (135a) est égale à une durée de la sous-trame de type long (135b) ;
la réception (510) d'un canal de commande de liaison descendante contenant des informations de commande de liaison descendante dans au moins l'une de la première pluralité de sous-trames de type court (135a), les informations de commande de liaison descendante planifiant l'au moins un premier bloc de données dans l'au moins un de la première pluralité de sous-trames de type court (135a) ; et
dans lequel plusieurs ressources de commande de liaison montante dans la première sous-trame de type long (135b) sont dérivées du canal de commande de liaison descendante dans l'au moins une de la première pluralité de sous-trames de type court.

2. Procédé selon la revendication 1, dans lequel la première pluralité de sous-trames de type court (135a) sont alignées avec les limites de sous-trames de type long (135b), ou dans lequel la première pluralité de sous-trames de type court (135a) ne sont pas alignées avec les limites de sous-trames de type long (135b).

3. Procédé selon la revendication 1, dans lequel le premier accusé de réception est transmis par l'intermédiaire d'un premier canal de commande de liaison montante de la première sous-trame de type long (135b), le premier canal de commande de liaison montante étant associé à une ressource de canal de commande de liaison montante, et éventuellement le premier canal de liaison montante couvrant toute la sous-trame de type long (135b).

4. Procédé selon la revendication 1, dans lequel les informations de commande de liaison descendante planifient au moins un second bloc de données dans au moins l'une d'une seconde pluralité de sous-trames de type court (135a) et une durée totale de la seconde pluralité de sous-trames de type court (135a) est égale à une durée de la sous-trame de type long (135b).

5. Procédé selon la revendication 4, le procédé comprenant en outre :
la réception d'au moins un second bloc de données dans au moins l'une d'une seconde pluralité de sous-trames de type court (135a) ;
la transmission d'un second accusé de réception correspondant à l'au moins un second bloc de données reçu dans la seconde pluralité de sous-trames de type court (135a) à l'aide d'une seconde sous-trame de type long (135b), et éventuellement
dans lequel le second accusé de réception transmet sur un second canal de commande de liaison montante à l'aide de la seconde sous-trame de type long (135b), et éventuellement dans lequel au moins une ressource de canal de commande de liaison montante dans la seconde sous-trame de type long (135b) est dérivée du canal de commande de liaison descendante.

6. Procédé selon la revendication 1, dans lequel l'accusé de réception comprend au moins un accusé de réception positif ou un accusé de réception négatif.

7. Appareil comprenant :
un récepteur (425) configuré pour recevoir au moins un premier bloc de données dans au moins l'une d'une première pluralité de sous-trames de type court (135a) ; et
un émetteur (420) configuré pour transmettre un premier accusé de réception correspondant à l'au moins un premier bloc de données reçu dans la première pluralité de sous-trames de type court (135a) à l'aide d'une première sous-trame de type long (135b), une durée de la première pluralité de sous-trames de type court (135a) étant égale à une durée de la sous-trame de type long (135b) ;
dans lequel le récepteur (425) est en outre configuré pour recevoir un canal de commande de liaison descendante contenant des informations de commande de liaison descendante dans au moins l'une de la première pluralité de sous-trames de type court (135a), dans lequel les informations de commande de liaison descendante planifient l'au moins un premier bloc de données dans l'au moins une de la première pluralité de sous-trames de type court (135a) ; et
dans lequel plusieurs ressources de canal de commande de liaison montante dans la première sous-trame de type long (135b) sont dérivées du canal de commande de liaison descendante dans l'au moins une de la première pluralité de sous-trames de type court.

8. Procédé comprenant :
la transmission d'au moins un premier bloc de données dans au moins l'une d'une première pluralité de sous-trames de type court (135a) ; et
la réception d'un premier accusé de réception correspondant à l'au moins un premier bloc de données transmis dans la première pluralité de sous-trames de type court (135a) à l'aide d'une première sous-trame de type long (135b), une durée de la première pluralité de sous-trames de type court (135a) étant égale à une durée de la sous-trame de type long (135b) ;
la transmission d'un canal de commande de liaison descendante contenant des informations de commande de liaison descendante dans au moins l'une de la première pluralité de sous-trames de type court (135a), les informations de commande de liaison descendante planifiant l'au moins un premier bloc de données dans l'au moins un de la première pluralité de sous-trames de type court (135a) ; et
dans lequel plusieurs ressources de canal de commande de liaison montante dans les premières sous-trames de type long (135b) sont dérivées du canal de commande de liaison descendante dans l'au moins une de la première pluralité de sous-trames de type court.

9. Procédé selon la revendication 8, dans lequel la première pluralité de sous-trames de type court (135a) sont alignées avec les limites de sous-trames de type long (135b), ou dans lequel la première pluralité de sous-trames de type court (135a) ne sont pas alignées avec les limites de sous-trames de type long (135b).

10. Procédé selon la revendication 8, dans lequel le premier accusé de réception est reçu par l'intermédiaire d'un premier canal de commande de liaison montante de la première sous-trame de type long (135b), le premier canal de commande de liaison montante étant associé à une ressource de canal de commande de liaison montante, et éventuellement le premier canal de commande de liaison montante couvre toute la sous-trame de type long (135b).

11. Procédé selon la revendication 8, dans lequel les informations de commande de liaison descendante planifient au moins un second bloc de données dans au moins l'une d'une seconde pluralité de sous-trames de type court (135a) et une durée totale de la seconde pluralité de sous-trames de type court (135a) est égale à une durée de la sous-trame de type long (135b).

12. Procédé selon la revendication 8, le procédé comprenant en outre :
la transmission d'au moins un second bloc de données dans au moins l'une d'une seconde pluralité de sous-trames de type court (135a) ;
la réception d'un second accusé de réception correspondant à l'au moins un second bloc de données transmis dans la seconde pluralité de sous-trames de type court (135a) à l'aide d'une seconde sous-trame de type long (135b)
et éventuellement
dans lequel le second accusé de réception transmet sur un second canal de commande de liaison montante à l'aide de la seconde sous-trame de type long (135b), et éventuellement dans lequel au moins une ressource de canal de commande de liaison montante dans la seconde sous-trame de type long (135b) est dérivée du canal de commande de liaison descendante, et éventuellement dans lequel l'accusé de réception comprend au moins un accusé de réception positif ou un accusé de réception négatif.

13. Appareil comprenant :
un émetteur (420) configuré pour transmettre au moins un premier bloc de données dans au moins l'une d'une première pluralité de sous-trames de type court (135a) ; et
un récepteur (425) configuré pour recevoir un premier accusé de réception correspondant à l'au moins un premier bloc de données transmis dans la première pluralité de sous-trames de type court (135a) à l'aide d'une première sous-trame de type long (135b), une durée de la première pluralité de sous-trames de type court (135a) est égale à une durée de la sous-trame de type long (135b) ;
dans lequel l'émetteur est en outre configuré pour transmettre un canal de commande de liaison descendante contenant des informations de commande de liaison descendante dans au moins l'une de la première pluralité de sous-trames de type court (135a), dans lequel les informations de commande de liaison descendante planifient l'au moins un premier bloc de données dans l'au moins une de la première pluralité de sous-trames de type court (135a) ; et
dans lequel plusieurs ressources de canal de commande de liaison montante dans la première sous-trame de type long (135b) sont dérivées du canal de commande de liaison descendante dans l'au moins une de la première pluralité de sous-trames de type court.
